# EUROPÄISCHE PATENTSCHRIFT

(11) **EP 2 637 903 B1**
(45) Veröffentlichungstag und Bekanntmachung des Hinweises auf die Patenterteilung: **14.02.2018**
(21) Anmeldenummer: 11782388.0
(22) Anmeldetag: 10.11.2011
(51) Int. Cl.: B60R 25/00

(54) **SCHLIEßSYSTEM, INSBESONDERE FÜR EIN KRAFTFAHRZEUG**
LOCKING SYSTEM ESPECIALLY FOR A VEHICLE
SYSTÈME DE VERROUILLAGE, DE PRÉFÉRENCE POUR UN VÉHICULE

(30) Priorität: 11.11.2010 DE 102010051026
(43) Veröffentlichungstag der Anmeldung: 18.09.2013
(73) Patentinhaber: Marquardt GmbH, 78604 Rietheim-Weilheim (DE)
(72) Erfinder: OBERGFELL, Robert, 78609 Tuningen (DE)
(74) Vertreter: Otten, Roth, Dobler & Partner mbB Patentanwälte
(86) Internationale Anmeldenummer: PCT/EP2011/005649
(87) Internationale Veröffentlichungsnummer: WO 2012/062468

(56) Entgegenhaltungen:
- EP-A1- 1 762 678
- DE-A1-102008 015 477

## Beschreibung

Die Erfindung betrifft ein Schließsystem nach dem Oberbegriff des Patentanspruchs 1.

Bei erhöhten Sicherheitsanforderungen werden elektronische Schließsysteme verwendet, die beispielsweise mittels elektromagnetischer Wellen arbeiten. Insbesondere bei Kraftfahrzeugen werden solche Schließsysteme als Türschließsysteme für die Zugangsberechtigung und/oder als Zündschlosssysteme, Lenkradverriegelungen, Wegfahrsperren o. dg1. für die Fahrberechtigung verwendet.

Derartige Schließsysteme sind aus der DE 43 40 260 A1 bekannt. Das Schließsystem besteht aus einer wenigstens zwei Zustände besitzenden, als Steuereinrichtung zur Ent- und/oder Verriegelung der Autotüren, des Zündschlosses o. dgl. ausgebildeten ersten Einrichtung und einer zugehörigen, in der Art eines elektronischen Schlüssels ausgebildeten zweiten Einrichtung. Die beiden Einrichtungen besitzen zu deren bestimmungsgemäßen Betrieb Sender und/oder Empfänger für die Übertragung der elektromagnetischen Signale. Im bestimmungsgemäßen Betrieb ist zwischen dem Schlüssel und der Steuereinrichtung wenigstens ein Signal als codiertes Betriebssignal zur Authentifikation des Schlüssels übertragbar, so dass nach positiver Auswertung des übertragenen Betriebssignals und damit bei berechtigtem Schlüssel eine Änderung des Zustandes der Steuereinrichtung bewirkbar ist.

Solche Schließsysteme sind auch mit sogenannten "Keyless"-Funktionalitäten weiterentwickelt. So ist bei der "KeylessEntry"-Funktionalität eine manuelle Betätigung des elektronischen Schlüssels durch den Benutzer nicht mehr notwendig. Es genügt, dass der Benutzer den Schlüssel mit sich führt. Das Betriebssignal wird dann für die Zugangsberechtigung zwischen den beiden Einrichtungen selbsttätig übertragen, wenn der Benutzer sich in einem, in der Nähe des Kraftfahrzeugs befindlichen Wirkbereich aufhält und dort beispielsweise den Türgriff an der Autotüre betätigt. Ebenso können diese Schließsysteme eine "KeylessGo"-Funktionalität aufweisen, wobei das Betriebssignal für die Fahrberechtigung zwischen den beiden Einrichtungen selbsttätig übertragen wird, wenn der Benutzer sich innerhalb des Kraftfahrzeugs befindet und beispielsweise eine Start/StopTaste im Armaturenbrett betätigt. Zur Übertragung der Signale ist der ersten Einrichtung wenigstens eine Antenne zugeordnet, die für wenigstens eines der Signale mit einem Schwingkreis zusammenwirken kann.

Es ist bei diesen Keyless-Schließsystemen die Vorsorge zu treffen, dass bei einem Ausfall der Keyless-Funktionalität, beispielsweise bei leerer Batterie im elektronischen Schlüssel, ein Notbetrieb des Kraftfahrzeugs ermöglicht ist. So kann in diesem Fall der Zugang zum Kraftfahrzeug mittels eines mechanischen Notschlüssels ermöglicht werden, indem an einer Autotüre ein mechanisches Türschloss befindlich ist. Desweiteren kann eine Not-Fahrberechtigung vorhanden sein, indem der elektronische Schlüssel in ein im Fahrzeug befindliches Zündschloss zu dessen Betätigung einsteckbar ist. Es ist auch bekannt, dass der elektronische Schlüssel in einem solchen Notfall mit einer im Fahrzeug befindlichen zusätzlichen Transponderleseeinheit für die Fahrberechtigung zusammenwirkt. Das Vorsehen einer derartigen Not-Funktionalität erfordert jedoch einen gewissen Aufwand sowie zusätzliche Kosten.

Weiter ist aus der EP 1 762 678 A1 ein Schließsystem mit Keyless-Funktionalität für ein Kraftfahrzeug bekannt. Dieses Schließsystems umfasst eine erste Einrichtung mit einer Antenne im Kraftfahrzeug sowie eine aus einem elektronischen Schlüssel bestehende zweite Einrichtung, wobei elektromagnetische Signale zum bestimmungsgemäßen Betrieb zwischen den beiden Einrichtungen übertragbar sind. Wenn die Batterie in der zweiten Einrichtung erschöpft ist, kann die zweite Einrichtung als Immobilizer mit einer Not-Funktionalität betrieben werden, indem diese in die Nähe der Antenne gebracht wird.

Der Erfindung liegt die Aufgabe zugrunde, die Not-Funktionalität für Keyless-Fahrzeuge weiter zu vereinfachen. Insbesondere soll eine Vereinfachung der Fahrzeugtopologie und/oder eine Kostenersparnis bei Fahrzeugen mit Keyless-Ausstattung durch Entfall des Zündschlosses oder einer ähnlichen Transponderleseeinheit für die Fahrberechtigung im Basisbetrieb erfolgen.

Diese Aufgabe wird bei einem gattungsgemäßen Schließsystem durch die kennzeichnenden Merkmale des Anspruchs 1 gelöst.

Beim erfindungsgemäßen Schließsystem ist die Antenne zwischen Sendebetrieb für die Keyless-Funktionalität sowie Empfangs- und/oder Sende-Betrieb für eine Not-Funktionalität bei Ausfall der Keyless-Funktionalität umschaltbar. Die Umschaltung erfolgt, indem der Schwingkreis im Sendebetrieb als Serienschwingkreis mit hoher Güte und im Empfangsbetrieb als Parallelschwingkreis mit geringer Güte betrieben wird. Geschaffen ist durch die Erfindung somit eine umschaltbare Keyless-Antenne, die die Doppelverwendung für den Betrieb mit Keyless-Funktionalität sowie für die Not-Funktionalität ermöglicht. Dadurch ist vorteilhafterweise die Einsparung eines elektronischen Zündschlosses und/oder einer Transponderleseeinheit ermöglicht. Weitere Ausgestaltungen der Erfindung sind Gegenstand der Unteransprüche.

In einer Weiterbildung sendet die erste Einrichtung ein erstes elektromagnetisches Signal für die zugehörige, beispielsweise als Transponder- und/oder Funkschlüssel ausgebildete zweite Einrichtung als Wecksignal. Dadurch wird die zweite Einrichtung aus einem Ruhezustand mit verringertem Energiebedarf in einen aktivierten Zustand für den bestimmungsgemäßen Betrieb übergeführt. Die erste Einrichtung kann nach Aussenden des ersten elektromagnetischen Signals ein Bereichsabgrenzungssignal als drittes elektromagnetisches Signal senden, mit dessen Hilfe die zugehörige zweite Einrichtung deren Standort in Bezug auf die erste Einrichtung am und/oder im Kraftfahrzeug bestimmen kann. Der Standort der zweiten Einrichtung in Bezug auf die erste Einrichtung am und/oder im Kraftfahrzeug wird anschließend mit einem vierten Signal als Rückantwortsignal von der zweiten zur ersten Einrichtung gesendet. Sind diese Signale erfolgreich übermittelt, so wird schließlich die Authentifikation der zweiten Einrichtung mittels weiterer fünfter Signale als codierte Betriebssignale durchgeführt. Sind somit die für das Wecken sowie die Bereichsabgrenzung notwendigen Vorbedingungen nicht erfüllt, so wird die an sich aufwendige Authentifikation gar nicht durchgeführt, womit eine effizientere Betriebsweise für das Schließsystem ermöglicht ist. Das der Authentifikation dienende fünfte elektromagnetische Signal kann schließlich in einer die Diebstahlsicherheit erhöhenden bidirektionalen Kommunikation bestehend aus mehreren Teilsignalen zwischen der ersten und der zweiten Einrichtung übertragen werden.

Zwischen dem Weck- und dem Bereichsabgrenzungssignal kann von der ersten Einrichtung ein zweites elektromagnetisches Signal als Selektionssignal gesendet werden, das insbesondere eine Information zur Identität des Kraftfahrzeugs enthält. Mit Hilfe des Selektionssignals kann der Dialog mit der zweiten Einrichtung bereits dann frühzeitig abgebrochen werden, wenn die zweite Einrichtung zu einem anderen Kraftfahrzeug, das gegebenenfalls jedoch vom gleichen Kraftfahrzeug-Typ ist, zugehörig ist. Somit werden lediglich demselben Kraftfahrzeug-Typ zugeordnete zweite Einrichtungen aktiviert und/oder verbleiben im aktivierten Zustand sowie im aktivierten Zustand befindliche, nicht zugehörige zweite Einrichtungen werden in den Ruhezustand zurückgeführt. Dadurch ist jeweils eine weitere Steigerung in der Effizienz der Betriebsweise des Schließsystems möglich.

Besonders bevorzugt ist, für das Weck- und/oder das Bereichsabgrenzungssignal ein induktives Signal zu verwenden, indem die Trägerwelle für das erste Signal und/oder das dritte Signal eine im induktiven, niederfrequenten (NF-)Bereich liegende Frequenz aufweist. Aufgrund der begrenzten Reichweite eines induktiven Signals lässt sich somit der Wirkbereich für das Schließsystem auf einfache Art und Weise einstellen. Gleichzeitig wird dadurch die Sicherheit vor Manipulation am Schließsystem durch unberechtigte Benutzer gesteigert. Beispielsweise kann die Frequenz für die NF-Trägerwelle in etwa 20 kHz, 120 kHz, 125 kHz o. dgl. betragen. Weiterhin ist bevorzugt, für das Selektionssignal und/oder das Rückantwortsignal und/oder das codierte Betriebssignal ein Funksignal zu verwenden, indem die Trägerwelle für das zweite Signal und/oder das vierte und/oder das fünfte Signal eine im höherfrequenten (RF-)Bereich liegende Frequenz aufweist. Dadurch ist aus Komfortgründen für den Benutzer ein vergrößerter Wirkbereich gegeben. Beispielsweise kann die Frequenz für die RF-Trägerwelle in etwa 315 MHz, 433 MHz, 868 MHz o. dgl. betragen.

Die Antenne kann als niederfrequente (LF-)Antenne eine Spule umfassen, wobei zur Spule ein Kondensator in Reihe und/oder parallel schaltbar ist. Die Spule sowie der Kondensator bilden dann einen Serien- und/oder Parallel-Schwingkreis, um die Antenne zur Abstrahlung der entsprechenden elektromagnetischen Wellen anzuregen.

In einer einfachen sowie kostengünstigen Ausgestaltung ist in der ersten Einrichtung eine Halbbrücke befindlich, die mit der Antenne zur Erzeugung der Trägerfrequenz für wenigstens eines der Signale zusammenwirkt. In der ersten Einrichtung kann ein Leistungshalbleiter, beispielsweise ein Modulations-FET, befindlich sein, der mit der Antenne zur Datenmodulation für wenigstens eines der Signale zusammenwirkt.

Zweckmäßigerweise ist in der ersten Einrichtung eine Steuerschaltung für die Halbbrücke und/oder den Leistungshalbleiter befindlich. Die Steuerschaltung kann in einfacher Art und Weise die Halbbrücke durch alternierendes Schalten zwischen elektrischer Spannung, also zwischen Plus, sowie Masse zur Erzeugung der Trägerfrequenz betreiben. In zusätzlicher Funktionalität kann die Steuerschaltung den Leistungshalbleiter durch Schalten zwischen dessen hochohmigen sowie leitenden Zustand, also zwischen Plus und Masse, entsprechend den auf die Trägerfrequenz zu modulierenden Daten betreiben.

Bevorzugterweise ist in kompakter Ausgestaltung der Kondensator in der ersten Einrichtung befindlich. Der Kondensator kann durch dauerhaftes Schalten der Halbbrücke sowie des Leistungshalbleiters auf Masse parallel zur Spule schaltbar sein, um so den benötigten Parallelschwingkreis für die Not-Funktionalität bei Ausfall der Keyless-Funktionalität zu bilden. Andererseits kann durch entsprechendes Betreiben der Halbbrücke für die Trägerfrequenzerzeugung sowie des Leistungshalbleiters für die Datenmodulation der Kondensator in Reihe zur Spule schaltbar sein, um so den vorgesehenen Serienschwingkreis für die Keyless-Funktionalität, d.h. für den ungestörten Betrieb des Schließsystems, zu bilden.

Desweiteren kann in einfacher Art und Weise in der ersten Einrichtung ein umschaltbarer Schalter zum Zuschalten des Empfangsbetriebs der Antenne befindlich sein, um so den Empfangspfad für die Not-Funktionalität bei Ausfall der Keyless-Funktionalität zu aktivieren. Mittels des Schalters kann zusätzlich die Gütereduzierung für den Parallelschwingkreis zuschaltbar sein, womit eine kompakte Anordnung erzielbar ist. Zweckmäßigerweise wird der Schalter von der Steuerschaltung in der ersten Einrichtung zur entsprechenden Umschaltung angesteuert.

Für eine besonders bevorzugte Ausgestaltung ist nachfolgendes festzustellen. Es ist eine Nutzung einer KeylessGo-Antenne für die folgenden beiden Systeme vorgenommen:
- Notfahrfunktion (bei Nichtfunktion KeylessGo),
- Normale KeylessGo-Funktion.

Dabei erfolgt eine automatische Umschaltung der elektrischen Antenneneigenschaften je nach geforderter Funktion. Üblicherweise wird im Sendebetrieb ein Serienschwingkreis mit hoher Güte eingesetzt. Dieser wird für den Empfangsfall in einen Parallelschwingkreis mit geringerer Güte umgeschaltet. Der bisher direkt in der Sendeantenne platzierte Kondensator wird nun im Steuergerät platziert um:
- eine Umschaltung des Serien- auf den Parallel-Schwingkreis zu ermöglichen und
- eine Tiefpasscharakteristik zu erhalten, um eine bessere Immunität gegen eingestrahlte Störungen zu erreichen.

Die mit der Erfindung erzielten Vorteile bestehen insbesondere darin, dass eine Vereinfachung der Fahrzeugtopologie und eine Kostenersparnis bei Fahrzeugen mit KeylessGo-Ausstattung durch Entfall des Zündschlosses oder einer ähnlichen Transponderleseeinheit für die Fahrberechtigung im Basisbetrieb durch Doppelverwendung einer umschaltbaren KeylessGo-Antenne erreicht ist. Die Reduzierung der Kosten ist dadurch gegeben, dass ein bisher benötigtes Steuergerät mit Verkabelung entfällt. Neben der Vereinfachung der Fahrzeugtopologie entfällt auch der bisher für dieses Steuergerät benötigte Bauraum im Fahrzeug.

Ein Ausführungsbeispiel der Erfindung mit verschiedenen Weiterbildungen und Ausgestaltungen ist in den Zeichnungen dargestellt und wird im folgenden näher beschrieben. Es zeigen
- Fig. 1: ein mit einem Schließsystem ausgestattetes Kraftfahrzeug,
- Fig. 2: ein schematisches Blockschaltbild für das eine erste Einrichtung sowie eine zweite Einrichtung aufweisende Schließsystem im Kraftfahrzeug,
- Fig. 3: ein schematisches Blockschaltbild der ersten sowie der zweiten Einrichtung mit einem Diagramm zur Übertragung der Signale,
- Fig. 4: ein Blockschaltbild für die erste Einrichtung mit zugeordneter Antenne nach dem Stand der Technik und
- Fig. 5: ein Blockschaltbild für die erste Einrichtung mit zugeordneter Antenne gemäß der Erfindung.

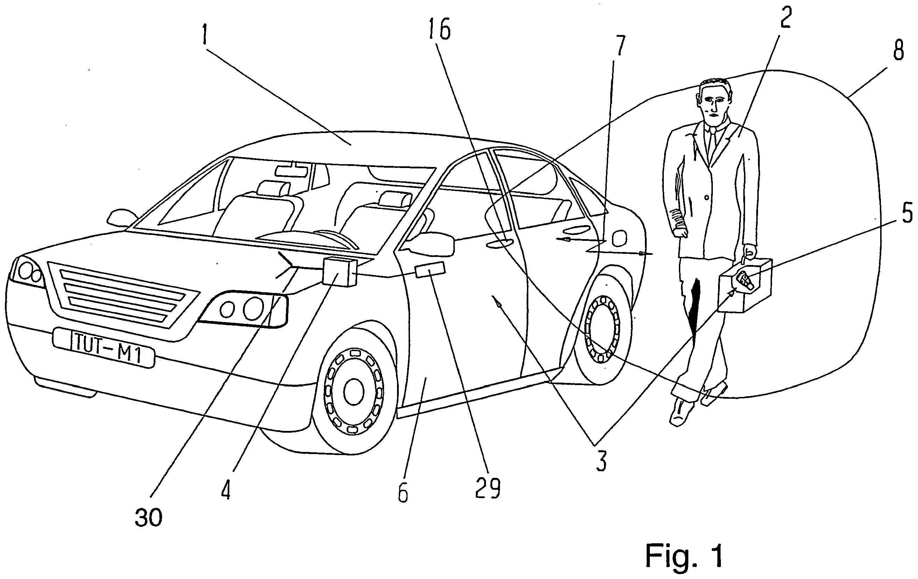

In Fig. 1 ist ein Kraftfahrzeug 1 mit dem berechtigten Benutzer 2 zu sehen. Das Kraftfahrzeug 1 ist für die Zugangsberechtigung mit einem Schließsystem 3 als Türschließsystem versehen, das eine als eine Steuereinrichtung ausgebildete erste Einrichtung 4 und eine zugehörige zweite Einrichtung 5 umfaßt. Die zweite Einrichtung 5 ist in der Art eines elektronischen Schlüssels, eines Identifikations(ID)-Gebers, einer Chipkarte, einer Smartcard o. dgl. ausgebildet. Die zweite Einrichtung 5 befindet sich im Besitz des berechtigten Benutzers 2, womit dieser innerhalb eines Wirkbereichs 8 Zugang zum Kraftfahrzeug 1 besitzt.

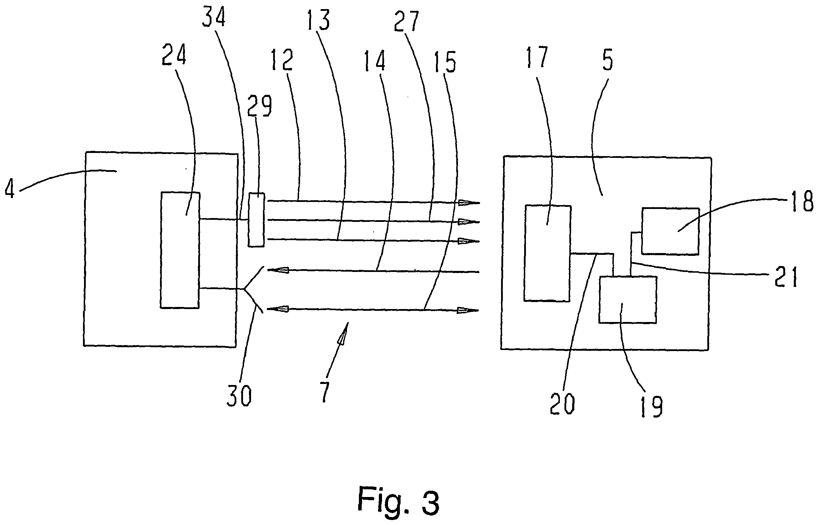

Die erste Einrichtung 4 besitzt wenigstens zwei Zustände, wobei im ersten Zustand eine Verriegelung und im zweiten Zustand eine Entriegelung der Autotüren 6 vorliegt. Die beiden Einrichtungen 4, 5 besitzen zu deren bestimmungsgemäßen Betrieb Mittel zum Senden und/oder Empfangen von Signalen 7 mittels einer elektromagnetischen Trägerwelle. Bei wenigstens einem dieser zwischen der zweiten Einrichtung 5 und der ersten Einrichtung 4 übertragenen Signale 7 handelt es sich um ein codiertes, elektromagnetisches Betriebssignal 15 (siehe Fig. 3). Das codierte Betriebssignal 15 dient zur Authentifikation der zweiten Einrichtung 5, womit bei berechtigter zweiter Einrichtung 5 nach positiver Auswertung des übertragenen Betriebssignals 15 eine Änderung des Zustandes der ersten Einrichtung 4 bewirkbar ist. Die Übertragung des codierten Betriebssignals 15 erfolgt dann, wenn der berechtigte Benutzer 2 den Türgriff 16 an der Autotüre 6 betätigt oder sich dem Türgriff 16 annähert. Dadurch wird die Entriegelung der Autotüren 6 entsprechend der KeylessEntry-Funktionalität ausgelöst. Ebensogut kann die Übertragung des codierten Betriebssignals 15 auch selbsttätig ohne Mitwirkung des Benutzers 2 erfolgen, sobald dieser den Wirkbereich 8 betritt, was jedoch im folgenden nicht näher betrachtet wird. Schließt der Benutzer die Autotüren 6 von außen, so erfolgt eine selbsttätige Verriegelung der Autotüren 6. Ebensogut kann die selbsttätige Verriegelung der Autotüren 6 erfolgen, nachdem der Benutzer 2 den Wirkbereich 8 verlassen hat.

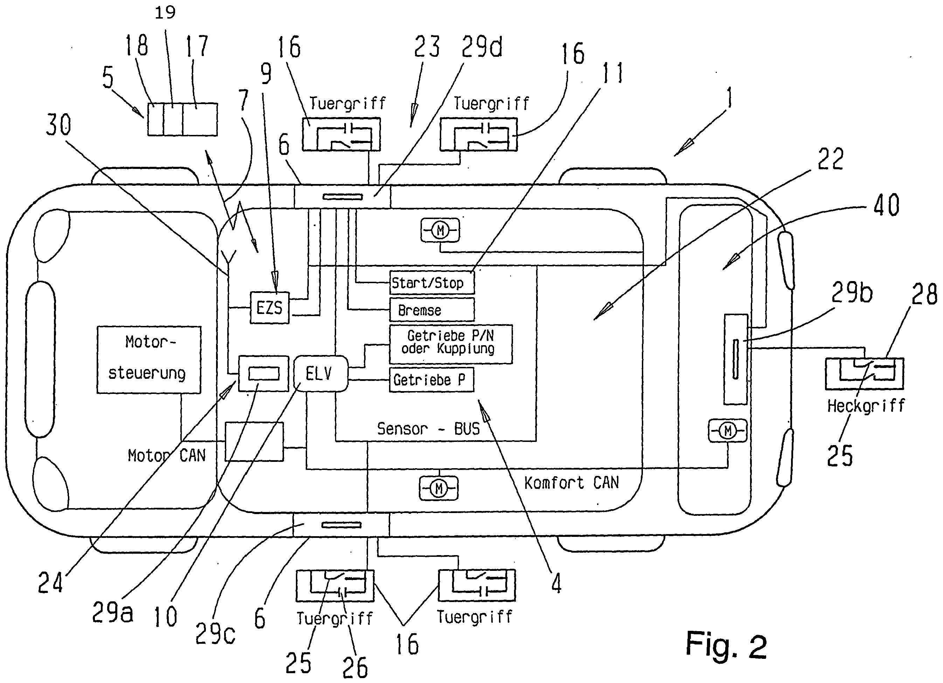

Das Schließsystem 3 stellt weiterhin die Fahrberechtigung für das Kraftfahrzeug 1 fest. Hierzu bewirkt die als Steuereinrichtung ausgebildete erste Einrichtung 4 ebenfalls entsprechend den beiden Zuständen die Ent- und/oder Verriegelung des Zündschlosses 9 (elektronisches Zündschloß EZS) und/oder der Lenkradverriegelung 10 (elektrische Lenkradverriegelung ELV), die in Fig. 2 zu sehen sind. Ebensogut kann ein sonstiges funktionsrelevantes Bauteil des Kraftfahrzeugs 1 durch die erste Einrichtung 4 dementsprechend angesteuert werden. Beispielsweise kann dadurch eine Freigabe und/oder Sperrung einer Wegfahrsperre, des Motorsteuergeräts o. dgl. erfolgen. Die Übertragung des codierten Betriebssignals 15 zur Authentifikation der zweiten Einrichtung 5 erfolgt dann, wenn der berechtigte Benutzer 2 sich im Kraftfahrzeug 1 befindet und einen Start/StopSchalter 1 betätigt. Dadurch wird der Start-Vorgang o. dgl. des Kraftfahrzeugs 1 entsprechend der KeylessGo-Funktionalität ausgelöst.

Die Übertragung der Signale 7 für die KeylessEntry/Go-Funktionalität wird durch Betätigung eines Schalters und/oder eines Sensors vom Benutzer 2 ausgelöst. Für die Zugangsberechtigung kann es sich beispielsweise um die manuelle Betätigung des Türgriffs 16, des Heckgriffs 28 o. dgl. handeln, wie in Fig. 2 zu sehen ist. Hierzu ist im Türgriff 16, Heckgriff 28 o. dgl. des Kraftfahrzeugs 1 ein Schalter 25 angeordnet. Wird ein beispielsweise kapazitiv arbeitender Näherungssensor 26 verwendet, wie ebenfalls in Fig. 2 am Türgriff 16 gezeigt ist, so kann vom Sensor 26 die Annäherung der Hand des Benutzers 2 an den Türgriff 16 bzw. Heckgriff 28 detektiert werden. Für die Fahrberechtigung befindet sich der vom Benutzer 2 manuell betätigbare Start/Stop-Schalter 11 im Kraftfahrzeug 1. Zweckmäßigerweise ist der Start/Stop-Schalter 11 am Gangwahlhebel, am Zündschloß 9, im Armaturenbrett, in der Mittelkonsole o. dgl. im Kraftfahrzeug 1 angeordnet.

Die Funktionsweise des erfindungsgemäßen Schließsystems 3 soll nun anhand der Fig. 3 näher erläutert werden. Zunächst sendet die erste Einrichtung 4 mittels eines Senders/Empfängers 24 als Mittel zum Senden und/oder Empfangen von Signalen ein als Wecksignal bezeichnetes erstes elektromagnetisches Signal 12 für die zugehörige zweite Einrichtung 5. Der ersten Einrichtung 4 ist dabei wenigstens eine Antenne 29, 30 zur Übertragung der Signale 7 zugeordnet. Durch das Wecksignal 12 wird die zweite Einrichtung 5 aus einem Ruhezustand mit verringertem Energiebedarf in einen aktivierten Zustand für den bestimmungsgemäßen Betrieb übergeführt. Danach sendet die erste Einrichtung 4 wenigstens ein weiteres, drittes elektromagnetisches Signal 13, das nachfolgend auch als Bereichsabgrenzungssignal bezeichnet ist. Dadurch kann die zugehörige zweite Einrichtung 5 deren Standort in Bezug auf die erste Einrichtung 4 bestimmen. Insbesondere lässt sich feststellen, ob die zweite Einrichtung 5 außerhalb am Kraftfahrzeug 1 sowie gegebenenfalls an welcher Stelle des Außenraums 23 und/oder im Innenraum 22 des Kraftfahrzeugs 1 befindlich ist. Nachfolgend sendet die zweite Einrichtung 5 mittels eines Senders/Empfängers 17 ein die Information zum ermittelteten Standort beinhaltendes viertes Signal 14 zur ersten Einrichtung 4, das im folgenden auch als Rückantwortsignal bezeichnet ist. Schließlich wird dann, wie bereits beschrieben, das fünfte elektromagnetische Signal als codiertes elektromagnetisches Betriebssignal 15 zur Authentifikation mittels der Sender/Empfänger 24, 17 zwischen der ersten und der zweiten Einrichtung 4, 5 übertragen. Das Signal 15 kann insbesondere aus mehreren Teilsignalen bestehen und in einer bidirektionalen Kommunikation zwischen den beiden Einrichtungen 4, 5 übertragen werden. Im Hinblick auf nähere Einzelheiten zur bidirektionalen Kommunikation an sich wird auch auf die DE 43 40 260 A1 verwiesen.

Die zweite Einrichtung 5, die als schematisches Blockschaltbild in Fig. 3 gezeigt ist, weist den Sender/Empfänger 17 als Mittel zum Senden und/oder Empfangen von Signalen und eine beispielsweise aus einem Mikrocomputer bestehende Logikschaltung 18 auf. Weiter ist in der zweiten Einrichtung 5 ein Mittel 19 zur Messung der Feldstärke wenigstens eines von der ersten Einrichtung 4 übertragenen Signals angeordnet. Das Mittel 19 zur Messung der Feldstärke misst die Feldstärke beziehungsweise die Intensität eines der übertragenen Signale, und zwar des Bereichsabgrenzungssignals 13. Zweckmäßigerweise ist das Mittel 19 zur Messung der Feldstärke als ein integrierter Baustein ausgestaltet, der nachfolgend auch als RSS(Radio Signal Strength)-Chip bezeichnet ist. Der RSS-Chip 19 besitzt einen Eingang 20, der mit dem Sender/Empfänger 17 verbunden ist, sowie einen RSSI(Radio Signal Strength Indicator)-Ausgang 21, der wiederum mit der Logikschaltung 18 verbunden ist.

Der RSS-Chip 19 erhält über den Eingang 20 das vom Sender/Empfänger 17 jeweils empfangene Signal 13 und erzeugt an seinem RSSI-Ausgang 21 ein in funktioneller Abhängigkeit zur Feldstärke des Signals 13 stehendes RSSI-Signal. Beispielsweise kann das RSSI-Signal proportional oder logarithmisch zur Feldstärke des Signals 13 abhängig sein. Durch entsprechende Auswertung des RSSI-Signals läßt sich dann die Standortbestimmung in der Logikschaltung 18 vornehmen.

Das Wecksignal 12 kann beispielsweise eine Kennung zum Kraftfahrzeug-Typ enthalten. Nach Empfang des Wecksignals 12 sind zunächst sämtliche im Wirkbereich 8 befindliche zweite Einrichtungen 5, die zum selben Kraftfahrzeug-Typ gehören, aktiviert. In einer weiteren Ausgestaltung des Schließsystems 3 sendet die erste Einrichtung 4 zwischen dem ersten Signal 12 und dem dritten Signal 13 ein zweites elektromagnetisches Signal 27 zur zweiten Einrichtung 5 als Selektionssignal, wie näher anhand von Fig. 3 zu erkennen ist. Das zweite Signal 27 enthält eine Information über die nähere Identität des Kraftfahrzeugs 1. Dadurch wird bewirkt, dass lediglich die tatsächlich zur ersten Einrichtung 4 zugehörigen zweiten Einrichtungen 5 im aktivierten Zustand verbleiben. Im aktivierten Zustand befindliche, nicht zum Kraftfahrzeug 1 zugehörige zweite Einrichtungen werden jedoch in den Ruhezustand zurückgeführt.

Es bietet sich an, die zur ersten Einrichtung 4 zugehörigen zweiten Einrichtungen 5 in gruppenartige Linien einzuteilen. Bevorzugterweise besitzt ein Kraftfahrzeug 1 zwei Linien, und zwar einen ersten elektronischen Schlüssel sowie Ersatzschlüssel als erste Linie und einen zweiten elektronischen Schlüssel sowie Ersatzschlüssel als zweite Linie. Zweckmäßigerweise weisen die Linien eine Rangfolge zur Durchführung der Authentifikation auf, so dass bei Vorhandensein beider Linien im Wirkbereich 8 lediglich eine Authentifikation mit der ranghöheren Linie, die entsprechend ausgewählt wird, durchzuführen ist. Das Selektionssignal 27 kann nun zusätzlich eine Information zu den der ersten Einrichtung 4 zugeordneten Linien enthalten, um dem Schließsystem 3 gegebenenfalls eine Auswahl für die Authentifikation zu gestatten.

Besonders bevorzugt ist, dass die Trägerwelle für das erste Signal 12 als Wecksignal und/oder das dritte Signal 13 als Bereichsabgrenzungsignal eine im induktiven, niederfrequenten (LF- bzw. NF-)Bereich liegende Frequenz aufweist Beispielsweise kann diese Frequenz in etwa 20 kHz; 120 kHz, 125 kHz o. dgl. betragen. Vorteilhafterweise weist ein solches induktives Signal eine auf die unmittelbare Umgebung des Kraftfahrzeugs 1 oder auf das Kraftfahrzeug 1 selbst begrenzte Reichweite auf. Dadurch wird erreicht, dass die zweite Einrichtung 5 lediglich dann aktiviert wird, wenn sie im Innenraum 22 des Kraftfahrzeugs 1 oder in einem der Wirkbereiche 8 im Außenraum 23 am Kraftfahrzeug 1 befindlich ist, womit Störungen und/oder Sicherheitslücken durch Überreichweiten vermieden sind. Aufgrund der begrenzten Reichweite von induktiven Signalen ist den jeweiligen Bereichen des Kraftfahrzeugs 1 jeweils eine eigene induktive Antenne 29 zugeordnet, und zwar dem Innenraum 22 die LF-Antenne 29a, dem Heckbereich 40 die LF-Antenne 29b und den Autotüren 16 die LF-Antennen 29c, 29d, wie anhand der Fig. 2 zu erkennen ist. Falls gewünscht kann auch das zweite Signal 27, wie in Fig. 3 gezeigt ist, eine im niederfrequenten (NF-)Bereich liegende Frequenz aufweisen. Es ist jedoch besonders bevorzugt, dass die Trägerwelle für das zweite Signal 27 als Selektionssignal und/oder das vierte Signal 14 als Rückantwortsignal und/oder das fünfte Signal 15 als Betriebssignal eine im höherfrequenten (RF- bzw. HF-)Bereich liegende Frequenz aufweist. Beispielsweise kann diese Frequenz in etwa 315 MHz, 433 MHz, 868 MHz o. dgl. betragen. Aufgrund der größeren Reichweite von höherfrequenten Signalen reicht es aus, lediglich eine RF-Antenne 30 im Kraftfahrzeug 1 vorzusehen, wie anhand von Fig. 2 ersichtlich ist.

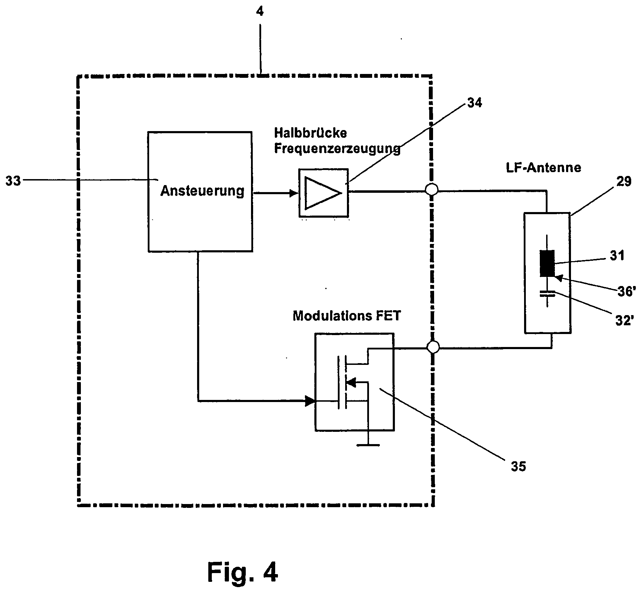

Die nähere Ausgestaltung der niederfrequenten LF-Antenne 29 bei einem Schließsystem 3 nach dem Stand der Technik ist in Fig. 4 zu sehen. Die LF-Antenne 29 zur Übertragung der niederfrequenten Signale 7 ist der ersten Einrichtung 4 zugeordnet und weist einen Schwingkreis 36' auf, der eine Spule 31 sowie einen mit der Spule 31 in elektrischer Verbindung stehenden Kondensator 32' umfasst. Somit sind sowohl die Spule 31 als auch der Kondensator 32' in der LF-Antenne 29 angeordnet, wobei eine entsprechende Ansteuerschaltung 33 mittels einer Halbbrücke 34 zur Frequenzerzeugung sowie einem Leistungshalbleiter 35 zur Datenmodulation, wie einem Modulations-FET 35, in der ersten Einrichtung 4 den Schwingkreis 36' der LF-Antenne 29 entsprechend betreibt. Für die KeylessGo-Funktion im Kraftfahrzeug 1 handelt es sich in den meisten Fällen dann bei der ersten Einrichtung 4 um das elektronische Zündschloß 9 und/oder um ein KeylessGo-Steuergerät für das Kraftfahrzeug 1. Sollte die KeylessGo-Funktionalität beispielsweise aufgrund einer leeren Batterie in der zweiten Einrichtung 5 ausfallen, so ist in der LF-Antenne 29 keine weitere Vorkehrung getroffen. Vielmehr ist für diesen Fall eine separate Notbetätigung für die Fahrberechtigung im Kraftfahrzeug 1 vorzusehen.

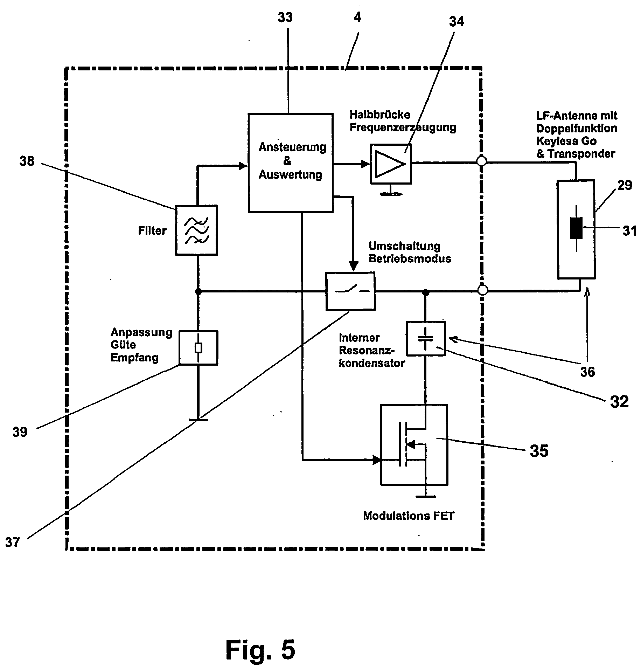

Erfindungsgemäß ist hingegen, wie in Fig. 5 gezeigt ist, die Antenne 29 zwischen Sendebetrieb für die Keyless-Funktionalität sowie Empfangs- und/oder Sendebetrieb für eine Not-Funktionalität bei Ausfall der Keyless-Funktionalität umschaltbar. Hierzu wird der Schwingkreis 36 im Sendebetrieb als Serienschwingkreis mit hoher Güte und im Empfangsbetrieb als Parallelschwingkreis mit geringer Güte betrieben. Bei der Not-Funktionalität kommuniziert die erste Einrichtung 4 mit der zweiten Einrichtung 5 in der Art eines Transponders, womit dann auch die codierten Betriebssignale 15 (siehe Fig. 3) zur Authentifikation als niederfrequente Signale übertragbar sind. Die zweite Einrichtung 5 entnimmt dabei aus den von der ersten Einrichtung 4 übertragenen Signalen 7 die zum Betrieb der zweiten Einrichtung 5 benötigte Energie, womit für die zweite Einrichtung 5 ein Notbetrieb bei an sich leerer Batterie ermöglicht ist. Für den Notbetrieb bringt der Benutzer 2 dann die zweite Einrichtung 5 lediglich in die Nähe der Antenne 29.

Gemäß Fig. 5 umfasst die niederfrequente LF-Antenne 29 eine Spule 31, mit der ein zur Spule 31 in Reihe und/oder parallel geschalteter Kondensator 32 zusammenwirkt, derart dass ein Serien- und/oder Parallel-Schwingkreis 36 gebildet ist. Der Kondensator 32 ist bevorzugterweise in der ersten Einrichtung 4 befindlich. Desweiteren ist der Kondensator 32 in Reihe sowie parallel zur Spule 31 schaltbar, um den Serien- und/oder Parallel-Schwingkreis 36 zu bilden. Die Umschaltung in den Parallel-Schwingkreis 36 erfolgt durch Schalten der Halbbrücke 34 sowie des Modulations-FET 35 dauerhaft auf Masse. Die Umschaltung in den Serien-Schwingkreis 36 hingegen ist im Keyless-Betrieb gegeben, indem hierzu die Halbbrücke 34 durch alternierendes Schalten zwischen Plus und Masse zur Erzeugung der Trägerfrequenz sowie der Modulations-FET 35 durch Schalten zwischen dem hochohmigen Zustand und Masse entsprechend den aufzumodulierenden Daten betrieben werden, wobei die Halbbrücke 34 sowie der Modulations-FET 35 dementsprechend von der Steuerschaltung 33 angesteuert werden. Mittels eines umschaltbaren Schalters 37 ist der Empfangspfad in der ersten Einrichtung 4 sowie ein Bauteil 39 zur Gütereduzierung zuschaltbar. Der Schalter 37 wird wiederum von der Steuerschaltung 33 in der ersten Einrichtung 4 zur Umschaltung angesteuert, um entsprechend zwischen der Keyless-Funktionalität im regulären Betrieb sowie für die Not-Funktionalität bei Ausfall der Keyless-Funktionalität umzuschalten. Beim Transponderbetrieb für die Not-Funktionalität wird eine entsprechende Auswertung zur Authentifikation in der Steuerschaltung 33 durchgeführt. Neben der Halbbrücke 34 sowie dem Modulations-FET 35 kann in der ersten Einrichtung 4 noch ein Filter 38 sowie das Bauteil 39 zur Anpassung der Güte für den Empfang im Transponderbetrieb vorgesehen sein. Die Güte des Schwingkreises 36 ist ein Maß für dessen Dämpfung, also dafür, wie lang der Schwingkreis 36 eine freie Schwingung aufrechterhalten kann. Um für den Empfang bei Datenübertragung im Transponderbetrieb eine Bedämpfung der von der ersten Einrichtung 4 übertragenen Schwingung durch die zweite Einrichtung 5 zu erleichtern, wird dann mit Hilfe des Bauteils 39 die Güte des Schwingkreises 36 entsprechend herabgesetzt.

Die Erfindung ist nicht auf das beschriebene und dargestellte Ausführungsbeispiel beschränkt. Die Erfindung umfaßt weiterhin auch alle fachmännischen Weiterbildungen im Rahmen der Schutzrechtsansprüche. So kann ein derartiges Schließsystem nicht nur im Kraftfahrzeug eingesetzt werden. Es ist auch eine Verwendung für ein Türschloss, das sich beispielsweise an einer Immobilie o. dgl. befindet, oder für sonstige Steuergeräte möglich.

### Bezugszeichen-Liste:

- 1:: Kraftfahrzeug / Fahrzeug
- 2:: (berechtigter) Benutzer
- 3:: Schließsystem
- 4:: erste Einrichtung
- 5:: zweite Einrichtung
- 6:: Autotüre
- 7:: Signal
- 8:: Wirkbereich
- 9:: Zündschloß
- 10:: Lenkradverriegelung
- 11:: Start/Stop-Schalter
- 12:: (erstes) Signal / Wecksignal
- 13:: (drittes) Signal / Bereichsabgrenzungssignal
- 14:: (viertes) Signal / Rückantwortsignal
- 15:: (fünftes) Signal / (codiertes) Betriebssignal
- 16:: Türgriff
- 17:: Sender/Empfänger (in der zweiten Einrichtung)
- 18:: Logikschaltung / Mikroprtizessor
- 19:: Mittel zur Messung der Feldstärke / RSS-Chip
- 20:: Eingang (von RSS-Chip)
- 21:: RSSI-Ausgang (an RSS-Chip)
- 22:: Innenraum (vom Kraftfahrzeug)
- 23:: Außenraum (vom Kraftfahrzeug)
- 24:: Sender/Empfänger (in der ersten Einrichtung)
- 25:: Schalter (im Türgriff / Heckgriff)
- 26:: (Näherungs)Sensor (im Türgriff)
- 27:: (zweites) Signal / Selektionssignal
- 28:: Heckgriff
- 29,a,b,c,d:: Antenne / LF-Antenne
- 30:: Antenne / RF-Antenne
- 31:: Spule
- 32,32':: Kondensator
- 33:: Ansteuerschaltung / Steuerschaltung
- 34:: Halbbrücke
- 35:: Leistungshalbleiter / Modulations-FET
- 36,36':: Schwingkreis
- 37:: Schalter
- 38:: Filter
- 39:: Bauteil (zur Anpassung der Güte)
- 40:: Heckbereich (von Kraftfahrzeug)

## Patentansprüche

1. Schließsystem, insbesondere für die Zugangs- und/oder Fahrberechtigung bei einem Kraftfahrzeug (1) in der Art einer KeylessEntry/Go-Funktionalität, mit einer wenigstens zwei Zustände besitzenden, als Steuereinrichtung ausgebildeten ersten Einrichtung (4), wie einer Steuereinrichtung zur Ent- und/oder Verriegelung der Autotüren (6), des Zündschlosses (9), der Lenkradverriegelung (10), zur Freigabe und/oder Sperrung der Wegfahrsperre, des Motorsteuergeräts und mit einer zugehörigen, in der Art eines elektronischen Schlüssels, eines ID-Gebers, einer Chipkarte ausgebildeten zweiten Einrichtung (5), wobei die beiden Einrichtungen (4, 5) zu deren bestimmungsgemäßen Betrieb Sender und/oder Empfänger (24, 17) für insbesondere elektromagnetische Signale (7) besitzen, wobei es sich insbesondere bei wenigstens einem der zwischen der zweiten Einrichtung (5) und der ersten Einrichtung (4) übertragenen Signale (7) um ein codiertes Betriebssignal (15) zur Authentifikation der zweiten Einrichtung (5) handelt, so dass nach positiver Auswertung des übertragenen Betriebssignals (15) bei berechtigter zweiter Einrichtung (5) eine Änderung des Zustandes der ersten Einrichtung (4) bewirkbar ist, wobei der ersten Einrichtung (4) wenigstens eine mit einem Schwingkreis (36) zusammenwirkende Antenne (29) zur Übertragung wenigstens eines der Signale (7) zugeordnet ist, und wobei die Antenne (29) zwischen Sendebetrieb für die Keyless-Funktionalität sowie Empfangs- und/oder Sende-Betrieb für eine Not-Funktionalität bei Ausfall der Keyless-Funktionalität umschaltbar ist, **dadurch gekennzeichnet, dass** der Schwingkreis (36) im Sendebetrieb als Serienschwingkreis mit hoher Güte und im Empfangsbetrieb als Parallelschwingkreis mit geringer Güte betrieben wird.

2. Schließsystem nach Anspruch 1, **dadurch gekennzeichnet, dass** die erste Einrichtung (4) ein erstes Signal (12) für die zugehörige zweite Einrichtung (5) als Wecksignal sendet, derart dass die zweite Einrichtung (5) aus einem Ruhezustand mit verringertem Energiebedarf in einen aktivierten Zustand für den bestimmungsgemäßen Betrieb übergeführt wird, dass vorzugsweise die erste Einrichtung (4) nach Aussenden des ersten Signals (12) wenigstens ein weiteres, drittes Signal (13) als Bareichsabgrenzungssignal sendet, derart dass die zugehörige zweite Einrichtung (5) deren Standort in Bezug auf die erste Einrichtung (4), insbesondere am und/oder im Kraftfahrzeug (1), bestimmen kann, dass weiter vorzugsweise nachfolgend die zweite Einrichtung (5) ein den Standort beinhaltendes weiteres, viertes Signal (14) zur ersten Einrichtung (4) sendet, dass noch weiter vorzugsweise das codierte Betriebssignal (15) zur Authentifikation der zweiten Einrichtung (5) als fünftes Signal (15) zwischen der zweiten Einrichtung (5) und der ersten Einrichtung (4) übertragen wird, wobei das der Authentifikation dienende fünfte elektromagnetische Signal (15) bevorzugterweise in einer bidirektionalen Kommunikation bestehend aus mehreren Teilsignalen zwischen der ersten und der zweiten Einrichtung (4, 5) übertragen wird, und dass nochmals weiter vorzugsweise die erste Einrichtung (4) zwischen dem ersten und dem dritten Signal (12, 13) ein zweites Signal (27) zur zweiten Einrichtung (5) als Selektionssignal sendet, wobei insbesondere das zweite Signal (27) eine Information über die Identität des Kraftfahrzeugs (1) enthält, derart dass zur ersten Einrichtung (4) zugehörige zweite Einrichtungen (5) im aktivierten Zustand verbleiben und im aktivierten Zustand befindliche, nicht zugehörige zweite Einrichtungen in den Ruhezustand zurückgeführt werden.

3. Schließsystem nach Anspruch 2, **dadurch gekennzeichnet, dass** die Trägerwelle für das erste Signal (12) und/oder das dritte Signal (13) eine im induktiven, niederfrequenten (LF-)Bereich liegende Frequenz, die beispielsweise in etwa 20, 120, 125 kHz beträgt, aufweist, und dass vorzugsweise die Trägerwelle für das zweite Signal (27) und/oder das vierte Signal (14) und/oder das fünfte Signal (15) eine im höherfrequenten (RF-)Bereich liegende Frequenz, die insbesondere in etwa 315, 433, 868 MHz beträgt, aufweist.

4. Schließsystem nach Anspruch 1, 2 oder 3, **dadurch gekennzeichnet, dass** die Antenne (29) als niederfrequente L.F-Antenne eine Spule (31) umfasst, wobei ein Kondensator (32) zur Spule (31) in Reihe und/oder parallel schaltbar ist, derart dass ein Serien- und/oder Parallel-Schwingkreis (36) gebildet ist.

5. Schließsystem nach einem der Ansprüche 1 bis 4, **dadurch gekennzeichnet, dass** in der ersten Einrichtung (4) eine Halbbrücke (34) befindlich ist, die mit der Antenne (29) zur Erzeugung der Trägerfrequenz für wenigstens eines der Signale (7) zusammenwirkt, und dass vorzugsweise in der ersten Einrichtung (4) ein Leistungshalbleiter (35) befindlich ist, der mit der Antenne (29) zur Datenmodulation für wenigstens eines der Signale (7) zusammenwirkt.

6. Schließsystem nach Anspruch 5, **dadurch gekennzeichnet, dass** in der ersten Einrichtung (4) eine Steuerschaltung (33) für die Halbbrücke (34) und/oder den Leistungshalbleiter (35) befindlich ist, wobei vorzugsweise die Steuerschaltung (33) die Halbbrücke (34) durch alternierendes Schalten zwischen elektrischer Spannung sowie Masse zur Erzeugung der Trägerfrequenz betreibt, und wobei weiter vorzugsweise die Steuerschaltung (33) den Leistungshalbleiter (35) durch Schalten zwischen dessen hochohmigen sowie leitenden Zustand entsprechend den zu modulierenden Daten betreibt.

7. Schließsystem nach Anspruch 5 oder 6, **dadurch gekennzeichnet, dass** der Kondensator (32) in der ersten Einrichtung (4) befindlich ist, dass vorzugsweise der Kondensator (32) durch Schalten der Halbbrücke (34) sowie des Leistungshalbleiters (35) auf Masse parallel zur Spule (31) schaltbar ist, und dass weiter vorzugsweise durch Betreiben der Halbbrücke (34) sowie des Leistungshalbleiters (35) der Kondensator (32) in Reihe zur Spule (31) schaltbar ist.

8. Schließsystem nach Anspruch 6 oder 7, **dadurch gekennzeichnet, dass** in der ersten Einrichtung (4) ein umschaltbarer Schalter (37) zum Zuschalten des Empfangsbetriebs der Antenne (29) befindlich ist, dass vorzugsweise mittels des Schalters (37) die Gütereduzierung für den Parallelschwingkreis zuschaltbar ist, und dass weiter vorzugsweise der Schalter (37) von der Steuerschaltung (33) in der ersten Einrichtung (4) zur Umschaltung angesteuert wird.

## Claims

1. A lock system, in particular for the access authorization and/or driving authorization in a motor vehicle (1) in the manner of a keyless entry/go functionality, comprising a first device (4) which has at least two states and is designed as a control device, such as a control device for unlocking and/or locking car doors (6), an ignition lock (9) and a steering wheel lock (10), and for releasing and/or blocking an immobiliser and an engine control unit, and comprising an associated second device (5) which is designed in the manner of an electronic key, an ID provider and a chip card, wherein the two devices (4, 5) have transmitters and/or receivers (24, 17) for, in particular, electromagnetic signals (7) for the intended operation of said devices, wherein in particular at least one of the signals (7) transmitted between the second device (5) and the first device (4) is an encoded operating signal (15) for authenticating the second device (5) so that after a positive evaluation of the transmitted operating signal (15), if the second device (5) is authorised, a change in the state of the first device (4) can be brought about, wherein at least one antenna (29) which interacts with a oscillating circuit (36) and is intended for transmitting at least one of the signals (7) is associated with the first device (4), and wherein the antenna (29) can be switched between transmission operation for the keyless functionality and receiving and/or transmitting operation for an emergency functionality if the keyless functionality fails, **characterised in that** the oscillating circuit (36) in transmission operation is operated as a series oscillating circuit having a high quality factor and in the receiving operation as a parallel oscillating circuit having a low quality factor.

2. The lock system according to claim 1, **characterised in that** the first device (4) generates a first signal (12) for the associated second device (5) as a wake-up signal such that the second device (5) is transferred from a rest state with reduced energy demand into an activated state for the intended operation, that preferably the first device (4), after transmission of the first signal (12), transmits at least one further third signal (13) as a range-limiting signal such that the associated second device (5) can determine the location thereof in relation to the first device (4), in particular on and/or in the motor vehicle (1), that more preferably the second device (5) then transmits a further fourth signal (14), containing the location, to the first device (4), that more preferably the encoded operating signal (15) for authenticating the second device (5) is transmitted as a fifth signal (15) between the second device (5) and the first device (4), wherein the fifth electromagnetic signal (15) used for authentication is transmitted preferably in bidirectional communication consisting of a plurality of partial signals between the first and the second device (4, 5), and that, once again, more preferably the first device (4) sends a second signal (27), between the first and the third signal (12, 13), to the second device (5) as a selection signal, wherein in particular the second signal (27) transmits information about the identity of the motor vehicle (1) in such a manner that second devices (5) associated with the first device (4) remain in the activated state and non-associated second devices which are in the activated state are returned to the rest state.

3. A lock system according to claim 2, **characterised in that** the carrier wave for the first signal (12) and/or the third signal (13) has a frequency lying in the inductive low-frequency (LF) range, which is, for example, approximately 20, 120, 125 kHz, and that preferably the carrier wave for the second signal (27) and/or the fourth signal (14) and/or the fifth signal (15) has a frequency lying in the higher-frequency (RF) range, which is in particular approximately 315, 433, 868 MHz.

4. A lock system according to claim 1, 2 or 3, **characterised in that** the antenna (29) has a coil (31) as a low-frequency LF antenna, wherein a capacitor (32) can be connected in series and/or in parallel to the coil (31) such that a series and/or parallel oscillating circuit (36) is formed.

5. A lock system according to one of claims 1 to 4, **characterised in that** a half-bridge (34) is disposed in the first device (4), said half-bridge interacting with the antenna (29) for generating the carrier frequency for at least one of the signals (7), and that preferably in the first device (4) a power semiconductor (35) is disposed which interacts with the antenna (29) for data modulation for at least one of the signals (7).

6. The lock system according to claim 5, **characterised in that** a control circuit (33) for the half-bridge (34) and/or the power semiconductor (35) is disposed in the first device (4), wherein preferably the control circuit (33) operates the half-bridge (34) by switching between electrical voltage and ground in an alternating manner to generate the carrier frequency, and wherein more preferably the control circuit (33) operates the power semiconductor (35) by switching between the high-resistance and conductive state thereof according to the data to be modulated.

7. The lock system according to claim 5 or 6, **characterised in that** the capacitor (32) is disposed in the first device (4), that preferably the capacitor (32) can be switched by switching the half-bridge (34) and the power semiconductor (35) to ground parallel to the coil (31), and that more preferably the capacitor (32) can be connected in series with the coil (31) by operating the half-bridge (34) and the power semiconductor (35).

8. The lock system according to claim 6 or 7, **characterised in that** a switchable switch (37) for connecting the receiving operation of the antenna (29) is disposed in the first device (4), that preferably quality reduction for the parallel oscillating circuit can be connected by means of the switch (37), and that more preferably the switch (37) is actuated for switching by the control circuit (33) in the first device (4).

## Revendications

1. Système de verrouillage, en particulier pour l'autorisation d'accès et/ou de conduite dans un véhicule automobile (1) du type à fonction d'accès/démarrage sans clé, comprenant un premier dispositif (4) possédant au moins deux états, réalisé sous forme d'un dispositif de commande, tel qu'un dispositif de commande pour le déverrouillage et/ou le verrouillage des portes (6) d'une automobile, de la serrure de contact (9), du verrouillage du volant de direction (10), pour libérer et/ou bloquer le dispositif d'immobilisation, l'appareil de commande du moteur, ainsi qu'un deuxième dispositif (5) associé, réalisé sous forme d'une clé électronique, d'un émetteur d'identification, d'une carte à puce, les deux dispositifs (4, 5) possédant, en vue de leur fonctionnement conforme, des émetteurs et/ou des récepteurs (24, 17) pour des signaux notamment électromagnétiques (7), au moins des signaux (7) transmis entre le deuxième dispositif (5) et le premier dispositif (4) étant en particulier un signal de fonctionnement codé (15) pour l'authentification du deuxième dispositif (5), de sorte qu'après analyse positive du signal de fonctionnement transmis (15), dans le cas d'un deuxième dispositif autorisé (5), une modification de l'état du premier dispositif (4) puisse avoir lieu, le premier dispositif (4) étant associé à au moins une antenne (29) coopérant avec un circuit oscillant (36) pour le transfert d'au moins un des signaux (7) et l'antenne (29) pouvant être commutée entre un mode émetteur pour la fonction sans clé et un mode récepteur et/ou émetteur pour une fonction de secours en cas de panne de la fonction sans clé, **caractérisé en ce que** le circuit oscillant (36) est utilisé en mode émetteur comme un circuit oscillant en série de haute qualité et, en mode récepteur, comme un circuit oscillant en parallèle de faible qualité.

2. Système de verrouillage selon la revendication 1, **caractérisé en ce que** le premier dispositif (4) émet un premier signal (12) pour le deuxième dispositif associé (5) en guise de signal de réveil, de sorte que le deuxième dispositif (5) passe d'un état de repos avec un besoin en énergie réduit à un état activé pour un fonctionnement conforme, **en ce que**, de préférence, le premier dispositif (4), après avoir envoyé le premier signal (12), émet au moins un troisième signal supplémentaire (13) en guise de signal de délimitation de zone, de sorte que le deuxième dispositif (5) associé puisse déterminer son emplacement par rapport au premier dispositif (4), en particulier au niveau du véhicule (1) et/ou dans celui-ci, **en ce qu'**ensuite, en outre, de préférence, le deuxième dispositif (5) émet un quatrième signal (14) supplémentaire contenant l'emplacement au premier dispositif (4), **en ce que**, encore préférablement, le signal de fonctionnement codé (15) pour l'authentification du deuxième dispositif (5) est transmis en guise de cinquième signal (15) entre le deuxième dispositif (5) et le premier dispositif (4), moyennant quoi le cinquième signal électromagnétique (15) servant à l'authentification est transmis de préférence dans une communication bidirectionnelle se composant de plusieurs signaux partiels entre les premier et deuxième dispositifs (4, 5) et **en ce que**, de préférence encore, le premier dispositif (4), entre le premier et le troisième signal (12, 13), émet un deuxième signal (27) pour le deuxième dispositif (5) en guise de signal de sélection, dans lequel, en particulier, le deuxième signal (27) contient une information sur l'identité du véhicule automobile (1), de sorte que les deuxièmes dispositifs (5) associés au premier dispositif (4) restent dans l'état activé et que les deuxièmes dispositifs se trouvant dans l'état activé et non associés soient renvoyés dans l'état de repos.

3. Système de verrouillage selon la revendication 2, **caractérisé en ce que** l'onde porteuse pour le premier signal (12) et/ou le troisième signal (13) présente une fréquence se trouvant dans une plage inductive basse fréquence (LF), qui est par exemple d'environ 20, 120, 125 kHz et **en ce que**, de préférence, l'onde porteuse pour le deuxième signal (27) et/ou le quatrième signal (14) et/ou le cinquième signal (15) présente une fréquence se trouvant dans une plage de fréquences plus élevées (RF), qui est en particulier d'environ 315, 433, 868 MHz.

4. Système de verrouillage selon la revendication 1, 2 ou 3, **caractérisé en ce que** l'antenne (29) comprend une bobine (31) en guise d'antenne LF basse fréquence, dans lequel un condensateur (32) peut être branché en série et/ou en parallèle avec la bobine (31), de sorte qu'un circuit oscillant en série et/ou en parallèle (36) soit formé.

5. Système de verrouillage selon une des revendications 1 à 4, **caractérisé en ce qu'**un demi-pont (34) se trouve dans le premier dispositif (4), qui coopère avec l'antenne (29) afin de produire la fréquence porteuse pour au moins un des signaux (7) et **en ce que**, de préférence, un semi-conducteur de puissance (35) se trouve dans le premier dispositif (4), qui coopère avec l'antenne (29) pour la modulation de données pour au moins un des signaux (7).

6. Système de verrouillage selon la revendication 5, **caractérisé en ce qu'**un circuit de commande (33) pour le demi-pont (34) et/ou le semi-conducteur de puissance (35) se trouve dans le premier dispositif (4), dans lequel de préférence le circuit de commande (33) actionne le demi-pont (34) par une commutation alternée entre une tension électrique et une masse pour la production de la fréquence porteuse et dans lequel, de préférence encore, le circuit de commande (33) actionne le semi-conducteur de puissance (35) par commutation entre son état de résistance élevée et son état conducteur, en correspondance avec les données à moduler.

7. Système de verrouillage selon la revendication 5 ou 6, **caractérisé en ce que** le condensateur (32) se trouve dans le premier dispositif (4), **en ce que**, de préférence, le condensateur (32) peut être branché en parallèle avec la bobine (31) par commutation du demi-pont (34) et du semi-conducteur de puissance (35) sur la masse et **en ce que**, de préférence encore, en actionnant le demi-pont (34) ainsi que le semi-conducteur de puissance (35), le condensateur (32) peut être branché en série avec la bobine (31).

8. Système de verrouillage selon la revendication 6 ou 7, **caractérisé en ce qu'**un commutateur réversible (37) se trouve dans le premier dispositif (4) pour commuter le fonctionnement de réception de l'antenne (29), **en ce que**, de préférence, la réduction de qualité pour le circuit oscillant en parallèle peut être commutée au moyen du commutateur (37) et **en ce que**, de préférence encore, le commutateur (37) est commandé par le circuit de commande (33) dans le premier dispositif (4) pour la commutation.
